# EUROPÄISCHE PATENTSCHRIFT

(11) **EP 2 006 176 B1**
(45) Veröffentlichungstag und Bekanntmachung des Hinweises auf die Patenterteilung: **01.12.2010**
(21) Anmeldenummer: 08158655.4
(22) Anmeldetag: 20.06.2008
(51) Int. Cl.: B60T 7/10

(54) **Feststellbremseinrichtung**
Fixing brake device
Frein de stationnement

(30) Priorität: 20.06.2007 AT 9582007
(43) Veröffentlichungstag der Anmeldung: 24.12.2008
(73) Patentinhaber: DGS Druckguss Systeme AG, 9015 St. Gallen (CH)
(72) Erfinder: Schober, Michael, 9303 Wittenbach (CH); Huber, Thomas, 9100 Herisau (CH); Pichlbauer, Peter, 9403 Goldach (CH)
(74) Vertreter: Babeluk, Michael

(56) Entgegenhaltungen:
- EP-A- 0 509 870
- EP-A- 1 258 405
- EP-A- 1 378 410
- DE-A1- 19 911 732
- JP-A- 9 226 545
- KR-A- 20040 037 820
- US-A1- 2006 075 845

## Beschreibung

Die Erfindung betrifft eine Feststellbremseinrichtung mit einem eine Arretiervorrichtung aufweisenden Bremshebel, welche ein Sperrsegment und eine in dieses eingreifende Sperrklinke aufweist, die in Zahnzwischenräume des Sperrsegments eingreift, wobei die Sperrklinke mit einem Vorspannelement und mit einer Entriegelungseinrichtung verbunden ist.

Ein Handbremshebel mit einer Arretiereinrichtung, welche aus einem Sperrsegment und einer Sperrklinke besteht, ist beispielsweise aus der DE 103 24 040 A1 bekannt.

Beim Betätigen einer Feststellbremse rastet die Sperrklinke nacheinander in jeden Zahnzwischenraum des Sperrsegments ein, um die erforderliche Arretierung zu gewährleisten. In der Regel werden sowohl Sperrklinke als auch Sperrsegment aus Metall hergestellt, so dass sich bei der Betätigung eine erhebliche Geräuschbelastung ergibt. Diese Geräuschbelastung kann theoretisch dadurch verhindert werden, dass einer der Bauteile aus einem weicheren bzw. elastischen Material, wie etwa aus Kunststoff, hergestellt wird. Dies hat jedoch eine Beeinträchtigung der Lebensdauer und eine Gefährdung der Betriebssicherheit zur Folge.

Aus EP 1 378 410 ist eine Betätigungsvorrichtung für eine Feststellbremse mit einem an einem Lagerbock schwenkbar gelagerten Handbremshebel, mit einer Festsetzeinrichtung, welche ein am Lagerbock fixiertes Sperrsegment und eine beweglich gelagerte Sperrklinke aufweist, und mit einer im Handbremshebel geführten und mit der Sperrklinke gekoppelten Betätigungsstange bekannt. Die Bewegung der Sperrklinke wird durch einen Anschlag mit einem elastischen Dämpfungselement abgebremst, wobei das Dämpfungselement bei Druckbeaufschlagung durch die Sperrklinke entlang eines vorgegebenen Dämpfungsweges gegen den Anschlag geführt ist.

Aus der EP 1 388 471 A ist eine Feststellbremse bekannt, bei der die Geräuschentwicklung bei der Betätigung dadurch verringert wird, dass das Sperrsegment elastisch in einer Halterung gelagert ist. Die Wirksamkeit dieser Maßnahme ist nicht allzu groß und es besteht auch bei dieser Lösung die Gefahr, dass das Einrasten der Sperrklinke in das Sperrsegment durch eine Verformung der elastischen Lagerung beeinträchtigt wird. Weiters ist in der EP 1 752 347 A eine Feststellbremse offenbart, bei der die Sperrklinke mit einer geräuschdämmenden Umhüllung versehen ist. Auch diese Lösung besitzt die oben beschriebenen Nachteile. Ähnliches gilt für eine Handbremse die in der DE 43 21 610 A beschrieben ist.

Aufgabe der vorliegenden Erfindung ist es, eine konstruktiv einfache Lösung anzugeben, die eine weitgehende Minimierung des Betätigungsgeräusches ermöglicht. Die Lösung soll dabei kostengünstig herstellbar sein und sämtlichen Anforderungen hinsichtlich Sicherheit und Langlebigkeit genügen. Insbesondere soll die erfindungsgemäße Feststellbremse ein besonders geringes Gewicht aufweisen und in fortgeschrittenem Leichtbauverfahren herstellbar sein. Eine weitere Anforderung ist es, die Bauteile möglichst kompakt auszuführen.

Erfindungsgemäß werden diese Aufgaben dadurch gelöst, dass ein Anschlag für die Sperrklinke vorgesehen ist, der den Aufschlag der Sperrklinke in den Zahnzwischenräumen des Sperrsegments dämpft. Wesentlich an der vorliegenden Erfindung ist, dass bei der Betätigung der Feststellbremseinrichtung die Sperrklinke nach dem Überschreiten eines Zahnes des Sperrsegmentes nicht umgebremst in den nachfolgenden Zahnzwischenraum gedrückt wird, sondern dass zuvor eine Dämpfung durch den Anschlag bewirkt wird. Wie bereits oben ausgeführt, ist es für eine sichere Funktion einer Feststellbremseinrichtung erforderlich, dass das Vorspannelement eine ausreichende Kraft, bzw. ein ausreichendes Moment auf die Sperrklinke ausübt, um einen sicheren Eingriff in das Sperrsegment zu gewährleisten. Diese Kraft, bzw. dieses Moment wird nun unmittelbar vor dem völligen Einrasten der Sperrklinke in einen Zahnzwischenraum des Sperrsegmentes durch eine Gegenkraft, bzw. ein Gegenmoment verringert, die, bzw. das durch den Anschlag auf die Sperrklinke ausgeübt wird. Auf diese Weise wird ein Großteil der entstehenden Geräusche unterdrückt bzw. verhindert, dass überhaupt Geräusche entstehen und es verbleibt ein geringfügiges Rastgeräusch, das in der Regel als angenehm empfunden wird.

Eine besonders begünstigte Ausführungsvariante der Erfindung sieht vor, dass die Sperrklinke am Bremshebel gelagert ist und dass der Anschlag fest mit dem Bremshebel verbunden ist. Auf diese Weise kann eine besonders einfache und kostengünstige Lösung erreicht werden, die außerdem ein geringes Gewicht aufweist. Insbesondere ist es dabei günstig, wenn die Sperrklinke und der Anschlag in einer Ausnehmung des Bremshebels aufgenommen sind. Der Bremshebel ist in der Regel ein plattenförmiger Bauteil, der eine bestimmte Dicke aufweisen muss, um eine ausreichende Steifigkeit zu haben. Die Gesamtabmessungen der Handbremse können nun wesentlich dadurch verringert werden, dass sowohl die Sperrklinke als auch der Anschlag versenkt ausgebildet sind. Dies hat naturgemäß zur Folge, dass auch das Sperrsegment in diese Ausnehmung hineinragt. Durch entsprechende Optimierung der Gestaltung kann auf diese Weise eine hohe Strukturfestigkeit und Steifigkeit gleichzeitig mit geringen Abmessungen erreicht werden.

Eine weitere Optimierung der kompakten Bauform kann dadurch erreicht werden, dass von der Achse der Sperrklinke gesehen der Sperrhaken, der Punkt, an dem die Druckstange angreift, und die Anschlagfläche in einem Winkelbereich liegen, der kleiner ist als 180°. Mit anderen Worten bedeutet dies, dass die Sperrklinke im Wesentlichen als einarmiger Hebel ausgebildet ist, der an einem Ende gelagert ist und an dessen einem Hebelarm sämtliche Angriffspunkte der Kräfte liegen. In der Praxis ist es im Allgemeinen nicht realisierbar, dass die Angriffspunkte auf einem Strahl liegen, der von der Achse ausgeht, aber es reicht aus, dass sie auf einer Seite der Achse liegen, um die gesetzten Ziele des kompakten Aufbaus zu erreichen.

Eine weitere besonders bevorzugte Ausführung der Erfindung sieht vor, dass die Sperrklinke im Wesentlichen ballig ausgebildet ist und eine konkave Anschlagfläche aufweist, die einen ersten Abschnitt aufweist, der sich tangential an den Anschlag annähert und die weiters einen zweiten Abschnitt aufweist, der im Eingriffszustand im Wesentlichen senkrecht am Anschlag anliegt. Auf diese Weise wird ein besonders schonender Eingriff der Sperrklinke am Anschlag erreicht, wobei gleichzeitig die Möglichkeit besteht, ohne besondere Nachteile robuste und langlebige Materialien am Anschlag einzusetzen, auch wenn diese eine etwas geringere Elastizität aufweisen.

Eine weitere besonders begünstigte Ausführungsvariante der Erfindung sieht vor, dass der Anschlag mit einer Anschlagfläche an der Sperrklinke zusammenwirkt und dass bei Berührung des Anschlags an der Anschlagfläche unter geringer Kraft die Sperrklinke von den Zahnzwischenräumen entfernt ist und dass die Sperrklinke unter Ausübung der Vorspannung des Vorspannelements vollständig in die Zahnzwischenräume eingreift, wobei ein elastisches Element des Anschlags und/oder der Anschlagfläche verformt wird. Wesentlich ist, dass die Sperrklinke durch den Anschlag erst unmittelbar vor dem Auftreffen auf den Zahnzwischenraum des Sperrsegmentes gebremst wird. Auf diese Weise kann eine unzulässige Verringerung der Haltekraft vermieden werden.

Konstruktiv besonders günstig ist es, wenn der Anschlag als Kunststoffbauteil ausgebildet ist, der in einer Ausnehmung des Bremshebels aufgenommen ist. Durch die einstückige Ausbildung wird eine erhebliche Vereinfachung erzielt.

Besonders günstig ist es, wenn der Anschlag elastisch ausgebildet ist. Alternativ kann vorgesehen sein, dass an der Anschlagfläche ein elastisches Element aufgebracht ist, wobei auch beide Lösungen gemeinsam ausgeführt sein können.

Die Erfindung wird im Folgenden anhand der Figuren näher erläutert. Es zeigen:
- Fig. 1: eine Ausführungsvariante der Erfindung in einer seitlichen Ansicht;
- Fig. 2: und Fig. 3 Schnitte nach Linie II - II bzw. III - III in Fig. 1;
- Fig. 4: und Fig. 5 Details von Fig. 1; und
- Fig. 6: ein Diagramm zur Erklärung der Geometrie der Bauteile.

Die als Handbremseinrichtung ausgebildete Feststellbremseinrichtung 1 weist einen Handbremshebel 2 mit einer Arretiervorrichtung und einer Entriegelungseinrichtung 4 auf. Der beispielsweise aus Leichtmetall bestehende Handbremshebel 2 ist in einem Lagerbock 5 schwenkbar um eine Achse 6 gelagert.

Die Arretiereinrichtung besteht aus einem Sperrsegment 7 und einer mit dem Sperrsegment 7 zusammenwirkenden Sperrklinke 8, welche im Wesentlichen als ein um eine Achse 16 drehbarer Bauteil ausgebildet ist. Die Sperrklinke 8 ist mittels eines Lagerzapfens 9 drehbar im Handbremshebel 2 gelagert. Die Sperrklinke 8 weist an dem dem Sperrsegment 7 zugewandten Ende einen Sperrhaken 10 auf, der in Sperrzähne 11 des Sperrsegmentes 7 eingreift. Die Sperrklinke 8 ist über die an dem Sperrsegment 7 angreifende Entriegelungseinrichtung 4 entriegelbar, wobei die Entriegelungseinrichtung 4 im vorliegenden Beispiel eine durch eine nicht dargestellte Feder belastete, im Bremshebel 2 verschiebbar gelagerte Druckstange 13 aufweist, welche über einen Druckknopf betätigbar ist.

Der Anschlag 12 ist als pilzförmiger Kunststoffbauteil ausgebildet, der in einer Ausnehmung des Handbremshebels 2 formschlüssig aufgenommen ist. Wesentlich ist, dass das Material ausreichend elastisch ist, um eine Verformung von etwa 1 mm zuzulassen. Gut geeignet ist in diesem Zusammenhang beispielsweise Polyurethan, Gummi oder ein anderer ausreichend flexibler Kunststoff.

Alternativ dazu kann die Sperrklinke 8 durch eine direkt an dieser angreifende Drehfeder in die Eingriffsrichtung vorgespannt sein, die durch Pfeil 18 dargestellt ist.

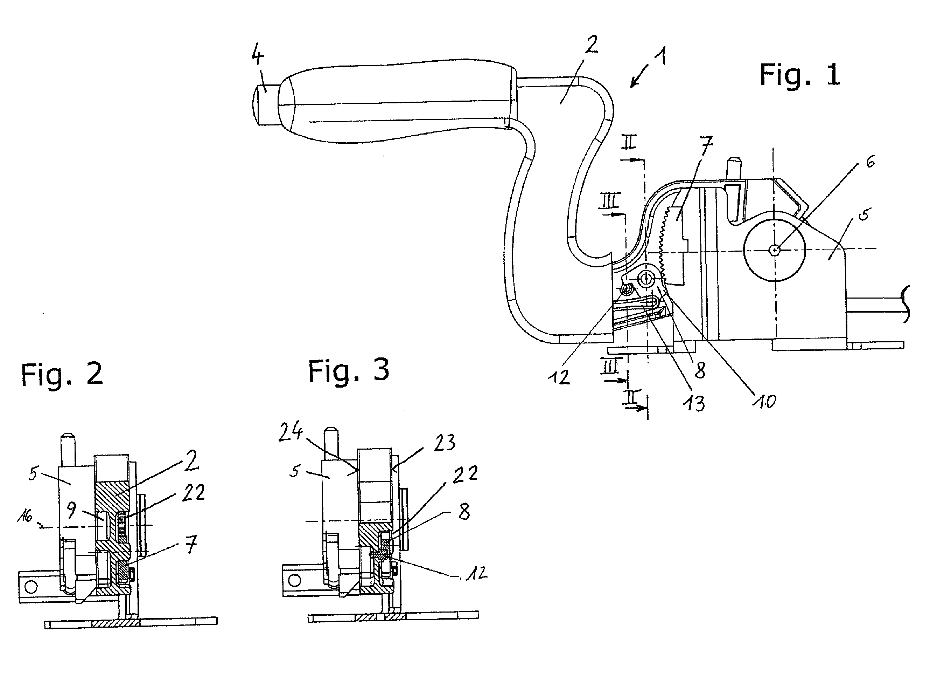

Aus den Fig. 2 und Fig. 3 ist ersichtlich, dass sowohl die Sperrklinke 8 als auch der Anschlag 12 in einer Ausnehmung 22 des Bremshebels 2 angeordnet sind. Dies bedeutet, dass die genannten Bauteile 8, 12 im dargestellten Ausführungsbeispiel vollständig zwischen den Seitenflächen 23, 24 des plattenförmigen Hebels 2 aufgenommen sind. Weiters ist aus Fig. 2 ersichtlich, dass dementsprechend auch das Sperrsegment 7 im Inneren dieser Ausnehmung 22 gelegen ist bzw. in die Ausnehmung hineinragt.

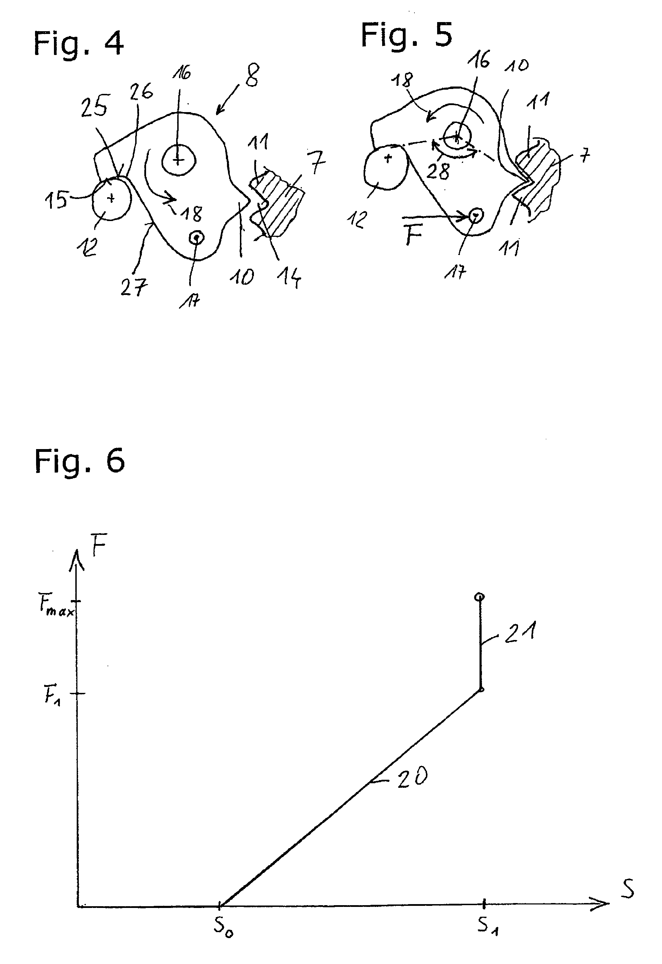

Aus den Fig. 4 und Fig. 5 ist ersichtlich, wie die einzelnen Bauteile zusammenwirken. In der in der Fig. 4 gezeigten Stellung liegt die Sperrklinke 8 ohne Krafteinwirkung an dem Anschlag 12 an. In dieser Stellung ist der Sperrhaken 10 noch nicht vollständig in den Zahnzwischenraum 14 zwischen den Zähnen 11 des Sperrsegments 7 eingedrungen. Erst dann, wenn die Kraft F durch die hier nicht dargestellte Druckstange 13, die in Punkt 17 angreift, ein Moment in der Richtung gegen den Uhrzeigersinn (Pfeil 18) auf die Sperrklinke 8 ausübt, wird der Anschlag 12 gemäß Fig. 5 elastisch verformt und der Sperrhaken 10 dringt vollständig in den Zahnzwischenraum 14 ein.

Die Sperrklinke 8 besitzt eine Anschlagfläche 15, die einen ersten Abschnitt 25 und einen zweiten Abschnitt 27 aufweist, die durch einen konkaven Abschnitt 26 miteinander verbunden sind. Durch diese Ausbildung wird erreicht, dass sich bei Drehung um die Achse 16 die Anschlagfläche 15 im Bereich des ersten Abschnittes 25 annähernd tangential an den Anschlag 12 annähert und die erste Berührung in Form eines schleifenden Kontaktes sanft stattfindet. In weiterer Folge wandert der Berührungspunkt entlang des konkaven Abschnittes 26 zum zweiten Abschnitt 27, in dem die Berührung dann im Wesentlichen senkrecht zur lokalen Bewegungsrichtung erfolgt, so dass abgesehen von der Verformung des Anschlages 12 ein definierter Anschlagpunkt gegeben ist. Auf diese Weise wird auch bei Verwendung von weniger nachgiebigem Material am Anschlag 12 ein sanfter Eingriff der Sperrklinke 8 sichergestellt. Weiters ist aus Fig. 5 ersichtlich, dass die gesamte Anschlagfläche 15, der Angriffspunkt 17 der Kraft F und der Sperrhaken 10 in einem Winkelbereich 28 liegen, der bei der dargestellten Ausführungsvariante 135° ausmacht und jedenfalls kleiner als 180° sein sollte.

In dem Diagramm in der Fig. 6 ist die Kraft F in Abhängigkeit vom Weg s dargestellt, den der Sperrhaken 10 bei der Drehung um die Achse 16 der Sperrklinke 8 zurücklegt. Dabei wird die Annahme getroffen, dass der Sperrhaken 10 genau über dem Zahnzwischenraum 14 liegt. Bis zum Weg s₀ ist die Sperrklinke 8 frei beweglich und es findet weder eine Berührung mit dem Sperrsegment 7 noch mit dem Anschlag 12 statt. In dem Punkt, der dem Weg s₀ der Sperrklinke 8 entspricht, liegt diese leicht an dem Anschlag 12 an. Bei einer weiteren Bewegung wird der Anschlag zunehmend verformt und die in Punkt 17 angreifende Kraft F steigt entlang der Linie 20 kontinuierlich auf einen Wert F₁ an. Beim Weg s₁ der Sperrklinke 8 kommt der Sperrhaken 10 im Zahnzwischenraum 14 in Anlage und die Kraft F erreicht gemäß Linie 21 einen Wert Fₘₐₓ. Bei der praktischen Betätigung der Handbremse ist die tatsächlich von der Druckstange 13 ausgeübte Kraft größer als die Kraft F, wird aber teilweise von einer Kraft ausgeglichen, die von den Zähnen 11 auf die Sperrklinke 8 ausgeübt wird. Wesentlich ist aber, dass im Zahnzwischenraum 14 zumindest ein Druck ausgeübt wird, der der Kraft Fₘₐₓ entspricht.

## Patentansprüche

1. Feststellbremseinrichtung (1) mit einem eine Arretiervorrichtung aufweisenden Bremshebel (2), welche ein Sperrsegment (7) und eine in dieses eingreifende, am Bremshebel (2) gelagerte Sperrklinke (8) aufweist, die in Zahnzwischenräume (14) des Sperrsegments (7) eingreift, wobei die Sperrklinke (8) mit einem Vorspannelement und mit einer Entriegelungseinrichtung (4) verbunden ist, wobei ein fest mit dem Bremshebel (2) verbundener Anschlag (12) für die Sperrklinke (8) vorgesehen ist, der den Aufschlag der Sperrklinke (8) in den Zahnzwischenräumen (14) des Sperrsegments (7) dämpft, **dadurch gekennzeichnet, dass** die Sperrklinke (8) und der Anschlag (12) in einer Ausnehmung (22) des Bremshebels (2) aufgenommen sind.

2. Feststellbremseinrichtung (1) nach Anspruch 1, **dadurch gekennzeichnet, dass** von der Achse (16) der Sperrklinke (8) gesehen der Sperrhaken (10), der Punkt (17), an dem die Druckstange (13) angreift, und die Anschlagfläche (15) in einem Winkelbereich (28) liegen, der kleiner ist als 180°.

3. Feststellbremseinrichtung (1) nach einem der Ansprüche 1 bis 2, **dadurch gekennzeichnet, dass** die Sperrklinke (8) im Wesentlichen ballig ausgebildet ist und eine konkave Anschlagfläche (15) aufweist, die einen ersten Abschnitt (25) aufweist, der sich tangential an den Anschlag (12) annähert und die weiters einen zweiten Abschnitt (27) aufweist, der im Eingriffszustand im Wesentlichen senkrecht am Anschlag (12) anliegt.

4. Feststellbremseinrichtung (1) nach einem der Ansprüche 1 bis 3, **dadurch gekennzeichnet, dass** der Anschlag (12) mit einer Anschlagfläche (15) an der Sperrklinke (8) zusammenwirkt und dass bei Berührung des Anschlags (12) an der Anschlagfläche (15) unter geringer Kraft die Sperrklinke (8) von den Zahnzwischenräumen (14) entfernt ist und dass die Sperrklinke (8) unter Ausübung der Vorspannung des Vorspannelements vollständig in die Zahnzwischenräume (14) eingreift, wobei ein elastisches Element des Anschlags (12) und/oder der Anschlagfläche (15) verformt wird.

5. Feststellbremseinrichtung (1) nach einem der Ansprüche 1 bis 4, **dadurch gekennzeichnet, dass** der Anschlag (12) als Kunststoffbauteil ausgebildet ist, der in einer Ausnehmung des Bremshebels (2) aufgenommen ist.

6. Feststellbremseinrichtung (1) nach einem der Ansprüche 1 bis 5, **dadurch gekennzeichnet, dass** der Anschlag (12) elastisch ausgebildet ist.

## Claims

1. Parking brake assembly (1) comprising a brake lever (2) provided with a locking device, said device having a locking segment (7) and a locking pawl (8) acting on the locking segment, the locking pawl (8) being borne on the brake lever (2) and engaging in the gaps (14) between the teeth of the locking segment (7), where said locking pawl (8) is furnished with a pretensioning element and a releasing device (4), and where a stop (12) fixed on the brake lever (2) is provided for the locking pawl (8), which stop (12) dampens the impact of the locking pawl (8) in the tooth gaps (14) of the locking segment (7), **characterised in that** the locking pawl (8) and the stop (12) are disposed in a recess (22) of the brake lever (2).

2. Parking brake assembly (1) according to claim 1, **characterised in that**, as seen from the axle (16) of the locking pawl (8), the locking hook (10), the point (17) where the rod (13) connects, and the stop surface (15) all lie within an angle (28) smaller than 180°.

3. Parking brake assembly (1) according to any of claims 1 to 2, **characterised in that** the locking pawl (8) is essentially crowned and has a concave stop surface (15) with a first section (25) which approaches the stop (12) tangentially, and a second section (27) which in the engaged state lies essentially perpendicularly against the stop (12).

4. Parking brake assembly (1) according to any of claims 1 to 3, **characterised in that** the stop (12) cooperates with a stop surface (15) on the locking pawl (8), and that the locking pawl (8) is not engaged in the tooth gaps (14) if the stop surface (15) touches the stop (12) under low force, and that the locking pawl (8) fully engages the tooth gaps (14) under the force of the pretensioning element, causing deformation of a flexible part of the stop (12) and/or of the stop surface (15).

5. Parking brake assembly (1) according to any of claims 1 to 4, **characterised in that** the stop (12) is a plastic part, which is disposed in a recess of the brake lever (2).

6. Parking brake assembly (1) according to any of claims 1 to 5, **characterised in that** the stop (12) is flexible.

## Revendications

1. Installation de frein de stationnement (1) comportant un levier de frein (2) muni d'un dispositif de blocage avec un segment de blocage (7) et un verrou (8) monté sur le levier de frein (2) et pénétrant dans le segment de blocage, le verrou pénétrant dans l'intervalle (14) entre les dents du segment de blocage (7),
le verrou (8) étant relié à un élément de précontrainte et à une installation de déverrouillage (4), une butée (12) reliée solidairement au levier de frein (2) étant prévue pour le verrou (8) pour amortir la venue en butée du verrou (8) dans les intervalles de dents (14) du segment de blocage (7),
installation **caractérisée en ce que**
le verrou (8) et la butée (12) sont logés dans une cavité (22) du levier de frein (2).

2. Installation de frein de stationnement (1) selon la revendication 1,
installation **caractérisée en ce que**
vu à partir de l'axe (16) du verrou (8), le crochet (10), le point (17) d'attaque de la tige de poussée (13) et la surface de butée (15) se situent dans une plage angulaire (28) inférieure à 180°.

3. Installation de frein de stationnement (1) selon l'une des revendications 1 et 2,
installation **caractérisée en ce que**
le verrou (8) a principalement une forme bombée avec une surface de butée (15) concave ayant un premier segment (25) se rapprochant tangentiellement de la butée (12) et comportant en outre un second segment (27) qui, en position de prise, s'appuie principalement perpendiculairement contre la butée (12).

4. Installation de frein de stationnement (1) selon l'une des revendications 1 à 3,
installation **caractérisée en ce que**
la butée (12) coopère par une surface de butée (15) avec le verrou (8) et en cas de contact de la butée (12) contre la surface de butée (15), sous une force faible, le verrou (8) se dégage des intervalles entre les dents (14), et
en exerçant la précontrainte de l'élément de précontrainte, le verrou (8) pénètre complètement dans les intervalles des dents (14) ce qui déforme l'élément élastique de la butée (12) et/ou de la surface de butée (15).

5. Installation de frein de stationnement (1) selon l'une des revendications 1 à 4,
installation **caractérisée en ce que**
la butée (12) est une pièce en matière plastique logée dans une cavité du levier de frein (2).

6. Installation de frein de stationnement (1) selon l'une des revendications 1 à 5,
installation **caractérisée en ce que**
la butée (12) est élastique.
